# EUROPEAN PATENT APPLICATION

(11) **EP 1 517 249 A1**
(43) Date of publication of application: **23.03.2005**
(21) Application number: 03425607.3
(22) Date of filing: 18.09.2003
(51) Int. Cl.: G06F 17/30

(54) **Method for electronically registering documents**

(71) Applicant: Cup 2000 S.p.A., 40126 Bologna (IT)
(72) Inventor: Vittori/Antisari, Pietro, 40123 Bologna (IT); Sberlati, Giuseppe, 40065 Pianoro (BO) (IT); Bonifazi, Roberta, 40126 Bologna (IT)
(74) Representative: Robba, Pierpaolo

(57) **Abstract**

The present invention concerns a method of electronic storage of documents composing a medical dossier. According to the invention, each dossier (CCL) is allotted a recording code (CPR) consisting, at least in part, of a nosological code (NOS) allotted to the dossier (CCL) and corresponding with a particular service given to a patient by the health service, and the documents in the dossier are scanned in order to generate electronic files identified by said recording code (CPR).

## Description

The present invention relates to a method of electronic storage of documents.

More particularly, the invention concerns a method of electronic storage, in digital format, of documents composing medical dossiers.

The invention has its particular application in the medical field and, more specifically, in the hospital and local health unit field. Yet, the invention can be advantageously applied in any field where the burden due to the document amount is to be reduced.

Indeed, it is known that processing of paper documents, especially in case of heterogeneous documents, leads to long collection and retrieval times and entails high costs for storage and keeping.

The problems related with managing great quantities of paper documents may be generally summarised as follows:
- great space occupation with consequent cost increase and risks for the operators' safety;
- ageing and consequent risk of deterioration of the physical supports, reading impossibility;
- impossibility of remote consulting;
- subjective and therefore non-uniform handling of the documents;
- long waiting times for consulting;
- documentation dispersion because of the fragmentation of the archives;
- difficulty in transferring the information.

Several methods for building and managing electronic archives of paper documents are known in information technology field. Said methods generally provide for information acquisition by scanning the paper documents, classification of the information by means of specific computer programs and image storage in files or folders organised in different ways, depending on the document types.

A first critical aspect of the methods of electronic storage of paper documents is generally the information acquisition step.

Actually in this step it is essential that all paper documents be acquired and converted into electronic format. Indeed, should even a single paper document not be acquired, the whole information collection might be compromised.

A second critical aspect of the methods of electronic storage of paper documents is generally the information classification step.

Actually in this step it is essential that the documents, once they have been converted into electronic format, be properly classified so that they can be easily retrieved. Indeed, should even a single document not be properly classified, retrieval thereof might be compromised.

A third critical aspect of the methods for electronically archiving paper documents is generally the information storage step.

Indeed, as known, even if the electronic storage devices guarantee a high reliability, thanks to the technologies used at present, they are however subject to data loss, due to time passing or to physical damages.

In order a storage method is reliable, it is therefore essential that information be stored in secure manner, to avoid the possibility of data loss. Indeed, should even a single classified document be lost, the whole information collection might be compromised.

The above-mentioned problems are particularly apparent in the medical field and in any field where the paper documents have legal value.

As known, in fact, until now all documents that must have legal value are drawn up on paper and they have value of supporting evidence upon being signed in handwriting.

For that reason, most of a medical dossier is compiled on paper. The doctors, even though they use digital tools for diagnostic investigation, terminate their reports by signing in handwriting, thereby guaranteeing the authenticity and hence the legal value of the document.

Moreover, due to their legal value, the above documents have to be kept for a long time. Medical dossiers are indeed official acts indispensable to ensure the certainty of law, besides being a valuable information source for historical researches in the health field and having effectiveness as supporting evidence.

A method of electronic storage of medical information about a patient is disclosed for instance in French Patent Application published under No. 2,760,279. According to the teaching of such a document, the possibility is envisaged of electronic storage of medical information about a patient carried by heterogeneous media, such as for instance paper, X-ray negatives, prints of echographs, photos, video images, etc.

This known method comprises assembling a digital medical dossier about a patient, by storing, in digital and preferably compressed form, all kinds of medical information, even coming from heterogeneous supports, as actually are the supports used in the medical field.

One of the problems related with introducing a method of electronic storage of documents into the existing health organisation, which as known is complex and multifaceted, arises from the need to avoid errors in performing the storage steps.

Thus, it is a first object of the invention to provide a method of electronic storage of documents, in particular medical dossiers compiled on paper, which allows solving the problems of the prior art and is reliable and efficient.

Another problem related with introducing a method of electronic storage of documents into the existing health organisation arises from the difficulty of integrating information coming from both paper documents and electronic documents into a same repository.

Indeed, at present, it is already possible to exploit modem technologies of electronic signature for drawing up a document with legal value in electronic format. Yet, the coexistence of a conventional system, which cannot immediately dispensed with because of the amount and the importance of the historical information contained in paper documents, with a completely computerised system is not easy and has not yet found a suitable solution.

Thus, it is a second object of the invention to provide a method of electronic storage of documents, in particular medical dossiers compiled on paper, which allows handling both documents drawn up on paper or other supports, and information directly written in electronic format, so as to allow the coexistence, within a same system, of working groups still operating with paper supports or the like requiring a hand-written signature, with other groups directly operating with information technology tools and exploiting the modem electronic signature technologies.

The above and other objects are achieved by the method according to the invention as claimed in the appended claims.

Advantageously, the method of the invention allows integrating the electronic storage of documents, drawn up both on paper and in electronic format.

Further in accordance with the invention, it is also possible to build an integrated system where the stored digital documents can be quickly retrieved.

Thanks to the information conversion effected in the storing phase in accordance with the method of the invention, the medical facilities can have computerised access to the dossiers of interest, independently of the way in which the dossiers are compiled.

A preferred exemplary embodiment of the invention will be now described in detail with reference to the accompanying drawings, in which:

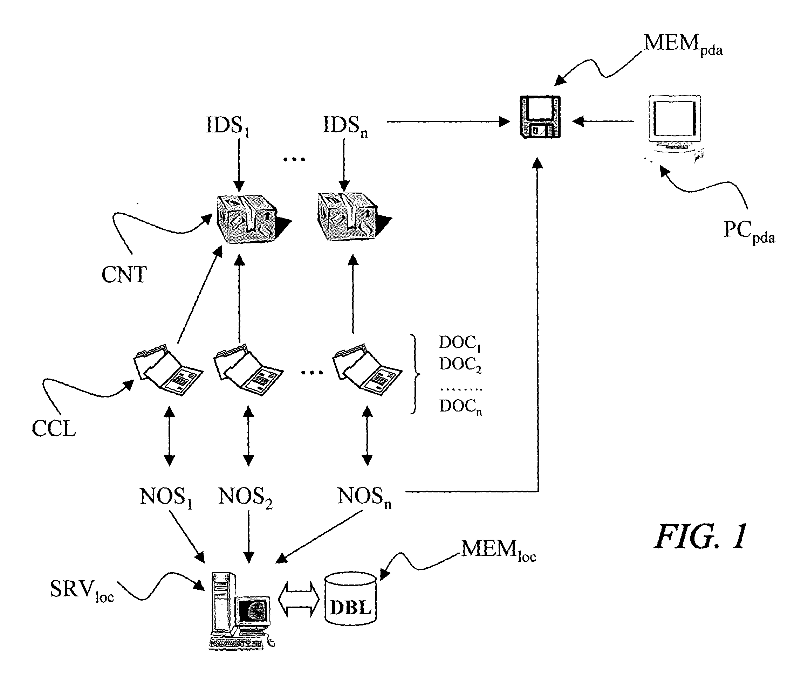

- Fig. 1 is a schematic diagram of a first part of the method of the invention;

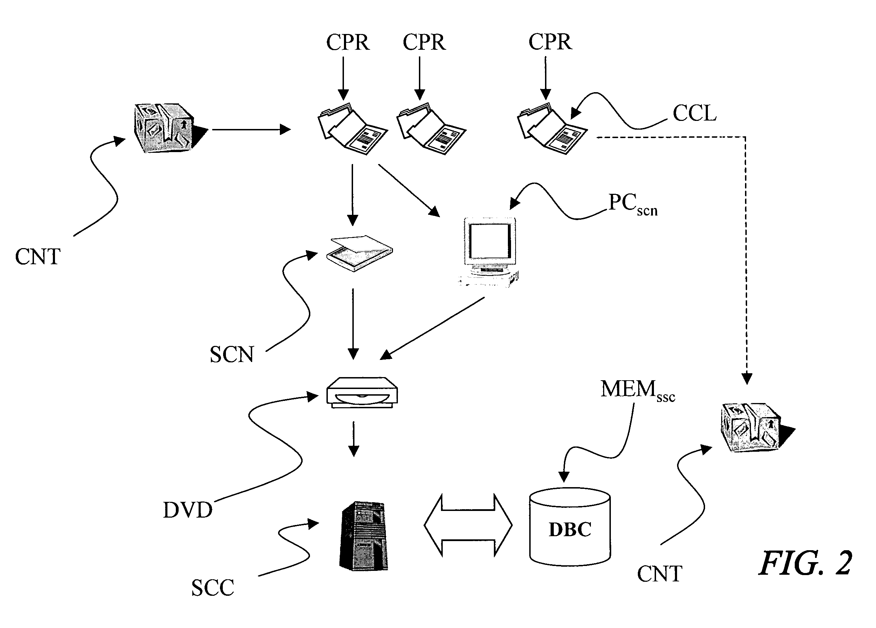

- Fig. 2 is a schematic diagram of a second part of the method of the invention;

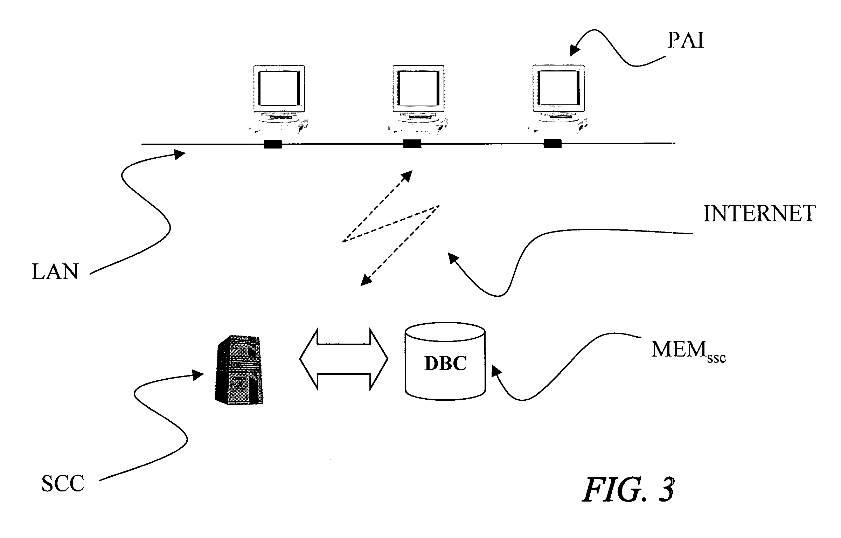

- Fig. 3 is a schematic diagram of a third part of the method of the invention.

Referring to the accompanying drawings, according to the invention, each patient accessing the medical facility, for ordinary admission or for day hospital admission, receives a nosological code NOS from the admission office.

According to the invention, nosological code NOS is given and stored, together with the patient's personal data, in database DEL in a storage unit MEL_{loc} present at a local server SRV_{loc}. Code NOS is then affixed, preferably in the form of bar code, and thus in a form quickly readable through an optical reading device, onto medical dossier CCL compiled for the specific admission of that patient. Each patient will receive different nosological codes NOS at each new admission and, of course, different patients will receive different nosological codes NOS₁, NOS₂...NOSₙ.

According to the invention, nosological code NOS consists of a sequence of nine digits, of which the first two digits are a check on the correctness of the following ones, according to a conventional algorithm. For instance, the first two characters in the nosological code are the modulo-10 sums of the even position digits and the odd position digits, respectively, of the following seven characters. Moreover, the third digit is the last digit of the year in which dossier CCL has been compiled.

In connection with a specific admission, the patient could be transferred from one department to another in the medical facility, and this will be recorded both in paper dossier CCL and in the admission database DEL managed by the medical facility. Upon patient's discharge or death, the medical facility where the patient stays will see to close patient's dossier CCL. It is to be appreciated that each department is responsible for compiling and closing its own part of the dossier.

Each department periodically delivers, at predetermined intervals T_{cons,} dossiers CCL it has closed to acceptance point PDA in charge of this.

For each dossier CCL, the staff in PDA, by electronic computers PC_{pda} and through a suitable computerised procedure, writes into a storage device MEM_{pda} the name of the superintendent of the department delivering the dossiers, the name of the operator that has taken the dossiers in charge at point PDA, the identifier of the PDA station, the date and time of the delivery, nosological code NOS, the code of the department having compiled the dossier and identifier IDS of container CNT where the dossier is placed for subsequent processing.

To reduce the time required by the operation, some data are input only once (PDA operator, department operator, department code), other data are automatically set (PDA position code, date, time, container identifier IDS), and only nosological code NOS is input by reading the respective label carrying the bar code for each dossier.

Whenever a container CNT is full, a new container identifier IDS is generated upon command of the PDA operator, and the procedure allows inputting further nosological codes NOS while keeping all other data that have been acquired.

Once the acquisition of paper medical dossiers CCL by PDA is complete, a receipt is given to the department superintendent, which receipt contains the complete list of the acquired dossiers CCL, associated with all above-mentioned data.

The list of acquired dossiers CCL is preferably obtained by optically reading a bar code affixed to each dossier and corresponding to nosological code NOS.

Such data will be interpreted by the scanning service to identify the codes to be given to the documents at the time of their processing.

A further printout is produced when each container CNT is completed, so as to identify the contents thereof in exhaustive manner. It is to be appreciated that dossiers from several departments can be present in a container CNT and that the summarising printout indicates at its end both the departments and the overall number of dossiers CCL present in the container. Moreover, a suitably formatted file is generated accompanying each container in its subsequent passages.

A last printout summarises the number of containers handled by each PDA at a given date. The provision for several PDAs is a consequence of the sizes of the medical facilities managed, entailing the need to have collection points close to the departments.

Advantageously however, thanks to the method of the invention, it is possible to have the electronic storage of the documents performed outside the facility producing the same documents, according to the practice known as "outsourcing", without thereby affecting the reliability of the obtained result.

Containers CNT produced in this manner are then moved to the rooms where the subsequent processing step takes place.

This step is the recording of medical dossiers CCL by means of electronic computers PC_{scn} and the subsequent scanning thereof through scanners SCN. In the recording phase a virtual medical dossier is created on a server processor. The scanned images are preferably obtained as files in TIFF or PDF standard format.

Moreover, data serving to describe the composition of the original, for instance the number of pages of the original, are detected in this phase: counting is automatically performed by the scanner.

Data serving for generating search keys for the subsequent searching phases, such as nosological code NOS of dossier CCL and patient's personal data, are detected.

It will also be possible to subdivide the documents contained within each dossier CCL, so as to accelerate the consulting phase and the combination of the information contained in the documents with digital information, the latter being e.g. stored onto suitable supports, contained in dossier CCL to be stored, according to medical image storage standard DICOM ("Digital Imaging and Communications in Medicine"), according to which the actual image has associated thereto a "Heading" containing the patient's data.

Other compatible standards may be for instance of the HL7 (Health Level Seven) type for structured representation of medical data.

During the recording step, unique recording codes (bar codes) CPR will be allotted to each original dossier CCL. Recording codes CPR are obtained by associating administrative information related with the compilation of medical dossier CCL: for instance, nosological code NOS, the code of the department having compiled the dossiers, the compilation year, a serial number allotted by the system managing the whole recording procedure, are included into the bar code.

Recording code CPR, which will be printed on a label to be affixed to the front page of medical dossier CCL, is preferably obtained by linking the following codes: identifier of the recording station, recording year, department code, serial number, a flag signalling a dossier with multiple nosological codes, a flag signalling a multiple dossier.

Codes CPR generated in the recording step will be associated, in central database DBC, with the files containing the images of the documents in the dossiers and with the positions of the originals of dossiers CCL in the storeroom selected for keeping the originals.

Allotting each dossier a recording code CPR besides the nosological code already allotted is a deliberate choice. Advantageously, by said measure, the reliability of the storage operation is enhanced: indeed, when allotting recording code CPR, a check is made on the correspondence of the nosological code previously affixed onto the dossier with the code used for obtaining recording code CPR and contained in the computerised database. Indeed, the possibility exists that a label with the nosological code corresponding to a dossier is affixed, by error, onto a different dossier. Thanks to the recording phase, it is therefore possible to correct any error made in allotting the nosological code and to improve the quality of the result in data storage.

A computerised procedure allows moreover checking whether all dossiers CCL closed by each department have been stored, by comparing the nosological codes of the received dossiers to the codes contained in medical facility database DBL. The outcome of such comparison is moreover communicated to the medical management by e-mail.

Optical computer-readable supports, preferably in DVD format, are produced at the end of this processing and are kept in duplicate to obviate possible inputting errors.

Once the scanning has been completed, containers CNT are stored once and for all. A bar code system allows storing in a computerised database the position of each container within the storeroom. Said data identifying the container position are stored in central electronic repository or database DBC, so that all information concerning the acquired dossiers is available.

Similarly, images obtained by scanning the documents in each dossier CCL, for instance in PDF (Portable Document Format) standard format, are stored in central storage device MEM_{ssc}, which can be accessed through medical dossier server SCC.

Said server SCC is constantly updated through a connection to database DBL of the hospital facility hosted on local server SRV_{loc}, so as to contain up-to-date information concerning each admission of all patients. The images in dossier CCL are automatically associated with the data about the admission of each patient and thus they become immediately available for consulting and possibly printing.

Server SCC has differentiated access levels for reading and printing the dossiers, so as to guarantee the privacy of the information contained in the database and to monitor the actual use of the system.

From each computerised access point PAI, the authorised staff, through user name and password having associated thereto specific rights, may consult the patients' medical dossiers through central server SCC, by carrying out a search both by name (even only partly input) and by nosological code NOS. The result of a search by name, once the concerned patient has been located, will provide the list of all admissions for that patient. For each admission, a suitable inscription indicates whether the medical dossier is available for on-line consulting, or indicates the processing step attained. It is to be appreciated that the interface used for exploiting the services offered by system SCC is that of a conventional web browser (e.g. MS Internet Explorer®, Netscape Navigator®) and hence installation of a specific software on the processors at access points PAI is not necessary.

A patient, both while being hospitalised and when he/she is discharged, can ask a copy of his/her dossier CCL, by paying for such copy.

A suitable computerised procedure selects the codes relevant to the requests for a copy of a medical dossier CCL and presents a mask to the operator, allowing correcting wrongly written or missing nosological codes NOS. The procedure calculates in any case the check code relevant to each nosological code NOS, thereby validating the data present in the mask.

Once the validation phase has been completed, the procedure excludes codes concerning refund requests effected in the same period, thereby dispensing with producing copies of dossiers for patients that have requested the refund of the sum paid and have given up the service.

The procedure generates two files in standard text format, which therefore are readable by any program besides being printable and immediately utilisable: the first file contains all requests for medical dossiers from the beginning of the current calendar year, and the second the requests made in the concerned month.

By accessing admission database DBC of the hospital facility, the procedure can determine, for each nosological code NOS remaining in the list after elimination of any refund, all departments where a given patient has stayed during a given hospitalisation.

If the procedure determines that all modules composing the dossier, i. e. the images of all dossier portions compiled by each department, are present in system SCC, the procedure requests the printout. In the negative, the procedure automatically sends a list of the nosological codes and of the names for which closing of the respective dossier is pressed for to each department by e-mail.

An adhesive label is prepared for the hard-copy dossiers, to be affixed onto the envelope and onto the registered-letter forms used for dispatch to the requesting patient.

The printing and dispatching date of the dossier is input in a suitable computerised procedure, so that statistics on the delivery times of the dossiers can be prepared based upon the date of request by the patient and the date of discharge of the same patient from the facility. In this way the Medical Management can moreover collect data about the efficiency of each department in closing and transmitting the medical dossiers.

For the dossiers that cannot be printed because they are incomplete, the procedure sending the reminders by e-mail will repeat such operation whenever it is executed, until the dossier is indicated as being complete.

The method of the invention can advantageously be implemented in a personal computer network including conventional devices such as personal computers, servers, scanners, bar code readers and printers,

Moreover, according to conventional techniques, the information could be accessible through Web interface via the Internet.

Moreover, when a medical dossier is requested for legal purposes, certification of the document could be automatically performed.

Use of smart cards containing a digital signature certificate will allow the operators to access the data and the images concerning the medical dossiers in absolutely secure and authorised manner, while allowing moreover the information flow to be managed according to one's own specific competence.

Thanks to the use of SSL (Secure Socket Layer) protocols capable of managing the access to the information and to ensure high security levels by using the Internet, the family doctors and the citizens themselves could interrogate the database of the medical dossiers.

Database interrogation is governed by user name and password having associated thereto different right levels, for instance the right to read, to write, to print.

It is also possible to provide for the booking, upon a check on the existence of the dossier, of a hard copy or of a record on a computer-readable support, e.g. a CD-ROM, to be picked up at a date, time and place to be agreed upon by the service operator and the requesting person.

Even if the method according to the invention has been disclosed with particular reference to the medical field, the same method can be used also in different fields, where the need exists to produce electronic archives of heterogeneous documents generated by different working groups or departments.

## Claims

1. A method of electronic storage of documents in a networked computerised system, said computerised system comprising at least one central processor (SCC) equipped with a storage device (MEM_{scc}), at least one local processor (SRV_{loc}) equipped with a storage device (MEM_{loc}), at least one unit (SCN) for optically reading documents and at least one data input terminal (PC_{scn}, PC_{pda}), wherein said documents can be of heterogeneous kinds and have different origins, the method comprising the steps of:
- preparing a plurality of physical dossiers (CCL) arranged to contain said documents (DOC);
- generating, for each said dossier (CCL), a corresponding first unique code (NOS) identifying the dossier;
- allotting said corresponding first unique code (NOS) identifying the dossier to each said dossier (CCL);
- storing said unique code (NOS) identifying the dossier in said local storage device (MEM_{loc}) with which said local processor (SRV_{loc}) is equipped;
- placing a plurality of documents (DOC) into each said dossier (CCL);
- grouping together a plurality of said dossiers (CCL);
- preparing a plurality of containers (CNT) arranged to receive at least two said dossiers (CCL);
- generating a second unique code (IDS) identifying each said container (CNT);
- allotting said corresponding second unique code (IDS) identifying the container (CNT) to each said container (CNT);
- storing said second unique code (IDS) and the associated dossier codes (NOS) in a second storage device (MEM_{pda});
- placing into each said container (CNT) the dossiers (CCL) of which the corresponding identifying codes (NOS) are associated with the codes (IDS) identifying said containers;
- transferring said containers (CNT) to a scanning station (SCN);
- generating a corresponding recording code (CPR) for each said dossier (CCL);
- allotting said corresponding recording code (CPR) to each said dossier (CCL);
- electronically imaging the documents (DOC) contained in each said dossier (CCL);
- storing said images as corresponding electronic files in a central storage device (MEM_{scc}), said files being identified by said recording code (CPR).

2. The method according to claim 1, wherein said dossiers are medical dossiers on paper, concerning services given to patients by the health service.

3. The method according to claim 2 wherein said documents comprise heterogeneous supports, such as for instance paper, X-ray negatives, printouts of echographs, photos, video images, and so on.

4. The method according to claim 2, wherein at least a portion of said first unique code (NOS) identifying the dossier (CCL) is a nosological code.

5. The method according to claim 4, wherein said first unique code (NOS) is a nine-character code in which the first two characters are a check pattern of the correctness of the seven remaining characters.

6. The method according to claim 5, wherein said check pattern is so chosen that the first two characters of said first code (NOS) represent the modulo-10 sums of the even position digits and the odd-position digits, respectively, of the following seven characters.

7. The method according to claim 6, wherein the third digit of said first code (NOS) represents the last digit of the year in which the dossier (CCL) has been compiled.

8. The method according to claim 4, wherein each said first unique code (NOS) identifying a dossier is associated, in said second storage device (MEM_{pda}), with the name of the superintendent of the department delivering the dossiers, the name of the operator having received the dossiers, the code of the processing station where the dossiers have been received, the delivery date and time, the nosological code (NOS), the code of the department where the dossier has been compiled, and the code (IDS) identifying the container (CNT) in which the dossier is placed.

9. The method according to claim 2, comprising the step of printing a list of dossiers (CCL) contained in each said container (CNT).

10. The method according to claim 2, wherein physical features of the document, such as for instance the number of pages, are detected during said scanning step.

11. The method according to claim 2, wherein information for generating search keys is detected during said scanning step.

12. The method according to claim 1, wherein said recording code (CPR) includes at least said nosological code (NOS), the code identifying the department where the dossier in the dossier has been compiled, the compilation year, and a unique serial number.

13. The method according to claim 1, wherein said first identifying code (NOS) is allotted to each said dossier (CCL) in the form of a bar code.

14. The method according to claim 1, wherein said recording code (CPR) is allotted to each said dossier (CCL) in the form of a bar code.
